# EUROPEAN PATENT SPECIFICATION

(11) **EP 0 812 762 B1**
(45) Date of publication and mention of the grant of the patent: **13.08.2003**
(21) Application number: 97303667.6
(22) Date of filing: 02.06.1997
(51) Int. Cl.: B62L 1/14

(54) **Bicycle brake device**
Fahrrad-Bremsgerät
Dispositif de frein de bicyclette

(30) Priority: 11.06.1996 JP 14936196
(43) Date of publication of application: 17.12.1997
(73) Proprietor: Shimano Inc., Osaka 590-0824 (JP)
(72) Inventor: Sugimoto, Masanori, Oosakasayama-shi, Osaka (JP)
(74) Representative: Pacitti, Paolo

(56) References cited:
- WO-A-95/10445
- NL-A- 9 301 878
- US-A- 4 351 418

## Description

### BACKGROUND OF THE INVENTION

The present invention relates to a bicycle brake device with which brake shoes are pressed against a wheel to effect braking by moving an inner cable positioned inside an outer casing.

A bicycle brake device generally involves the pressing of brake shoes against a wheel to effect braking by using a brake lever provided to the handlebar to move an inner cable positioned inside an outer casing. The brake shoes are supported by a pair of brake links, and the brake links usually are operated by one of two methods: center pull and side pull. In the center-pull type of brake device, which is used primarily in cantilevered brake devices, an inner cable that is branched in two is attached to the distal ends of the two brake links, and the outer casing is attached to the bicycle frame. In the side-pull type of brake device, used primarily in caliper type brake devices, the inner cable and the outer casing each are attached to a brake link.

Cantilevered brake devices with the same cable connection configuration as the side-pull type of brake device (that is, the inner cable and the outer casing each are attached to a brake link) have been put to practical use in recent years. These are high-performance brake devices with improved braking performance, and the change in the braking force with respect to the amount of movement of the inner cable (cable stroke) after the brake shoes contact the rim (hereinafter referred to as the braking characteristic) is greater than with a conventional design. As a result, the braking force tends to increase suddenly with only very slight brake lever operation. This makes braking difficult for a beginner who is unfamiliar with the brake lever operation. Also, if the braking force on the rear wheel increases suddenly, then when fine brake lever operation is impossible because of the gap between the brake shoes and the wheel in a cross-country race, for example, the rear wheel will slip and the bicycle will be difficult for even an advanced rider to control.

One possible way to prevent the above problem is to reduce the braking characteristic of the brake lever during braking. This has been put into practice in the operating force transmission device disclosed in Japanese Laid-Open Patent Application 63-203491. This operating force transmission device is provided with a control spring in the cable axial direction somewhere along the operating cable, which is composed of an inner cable and an outer casing, and is also provided with an adjuster for adjusting the spring force of the contro spring. This control spring bends under the brake actuation load, so the output with respect to the input to the brake links is reduced, which allows the braking characteristic to be decreased.

If an operating force transmission device such as this is provided at some point along the operating cable, then when the spring force (bias force) at which the control spring begins to bend is suitably adjusted, the control spring will begin to bend during braking when the tension on the cable becomes greater than the biasing force of the control spring. As a result, the braking characteristic will be smaller, and sudden increases in the braking force during braking can be suppressed even with a high-performance brake device. Of course, the braking characteristic generally varies with the type of the brake device, its shape, and other such factors. Accordingly, the desired braking characteristic during braking will not be obtained unless a transmission device that matches the braking characteristic for the brake device in question is provided somewhere along the operating cable. Unfortunately, since the transmission device is provided separately from the brake device along the operating cable, a beginner could mistakenly mount a transmission device intended for a brake device with a different braking characteristic along the operating cable, in which case the desired braking characteristic during braking will not be obtained, and the brake actually may be more difficult to operate. Furthermore, the space in which the operating cable is laid is frequently relatively narrow so that the inner cable can move smoothly through the outer casing. Consequently, if a transmission device that is long in the cable axial direction is provided somewhere along the operating cable, then the degree of freedom with which the operating cable can be positioned will be reduced, making the operating cable layout more difficult to design.

NL-A-9301878 discloses a brake apparatus that has all the features of the preamble of claim 1.

### SUMMARY OF THE INVENTION

The present invention is directed to a bicycle brake device which ensures a desired braking characteristic without impeding proper cable layout. According to the present invention, there is provided brake apparatus according to claim 1. Preferable features of the invention are set out in the dependent claims.

In a specific embodiment, the brake arm includes a pivot coupling portion disposed on one of an upper portion and a lower portion of the brake arm for pivotably coupling the brake arm to a mounting member, the brake pad coupling component is disposed on an intermediate portion of the brake arm, and the control element coupling component is disposed on the other one of the upper portion and the lower portion of the brake arm. In this case the brake force control mechanism includes a swing link swingably coupled between the brake arm and the control element coupling component, and a biasing mechanism for biasing the swing link to an initial position so that the swing link remains in the initial position until both the brake resistive force and the brake control force exceed the particular nonzero values. At that time the swing link may swing relative to the brake arm, thus reducing the braking force applied to the wheel rim. The range of motion of the swing link may be limited so that the original braking characteristic may be restored, resulting in greater braking force, when the swing link reaches the end of its range of motion. The brake force control mechanism may further include a bias force varying mechanism for varying a bias force of the biasing mechanism. If the biasing mechanism is formed as a spring, then the bias force varying mechanism may be formed as a cam which engages an end of the spring. In any event, since the brake force control mechanism is provided on the braking device itself, the user need not be concerned with the compatibility of a cable-mounted brake force control mechanism. Also, since no extra devices are provided to the operating cable, the operating cable is easy to lay out.

The present invention can be applied to a side-pull type of brake as well. In this case the brake pad coupling component is disposed on one of an upper portion and a lower portion of the brake arm, the control element coupling component is disposed on the other one of the upper portion and the lower portion of the brake arm, and the brake arm includes a pivot coupling portion disposed on an intermediate portion of the brake arm for pivotably coupling the brake arm to a mounting member. The brake force control mechanism then may be disposed on the upper portion of the brake arm, and the brake force control mechanism may have a construction similar to that described above.

### BRIEF DESCRIPTION OF THE DRAWINGS

Figure 1 is a side view of a portion of a bicycle to which a particular embodiment of a brake device according to the present invention has been applied;
Figure 2 is a front view of a particular embodiment of a brake device according to the present invention;
Figure 3 is a cross sectional view of the brake device shown in Figure 2;
Figure 4 is a detailed cross sectional view of a particular embodiment of a braking characteristic varying mechanism according to the present invention used in the brake device shown in Figure 2;
Figure 5 is a partially exploded view showing the mounting of the brake device of Figure 2 to a bicycle frame;
Figure 6 is a detailed front view illustrating the operation of the brake characteristic varying mechanism shown in Figure 4;
Figure 7 is a graph illustrating the braking force characteristic of the brake device shown in Figure 2;
Figure 8 is a front view of an alternative embodiment of a brake device according to the present invention;
Figure 9 is a front view of another alternative embodiment of a brake device according to the present invention;
Figure 10 is a side view of the brake device shown in Figure 9;
Figure 11 is a view taken along line XI-XI in Figure 10;
Figure 12 is a view taken along line XII-XII in Figure 10;
Figure 13 is a view taken along line XIII-XIII in Figure 10;
Figure 14 is a front view of another alternative embodiment of a brake device according to the present invention.

### DETAILED DESCRIPTION OF THE EMBODIMENTS

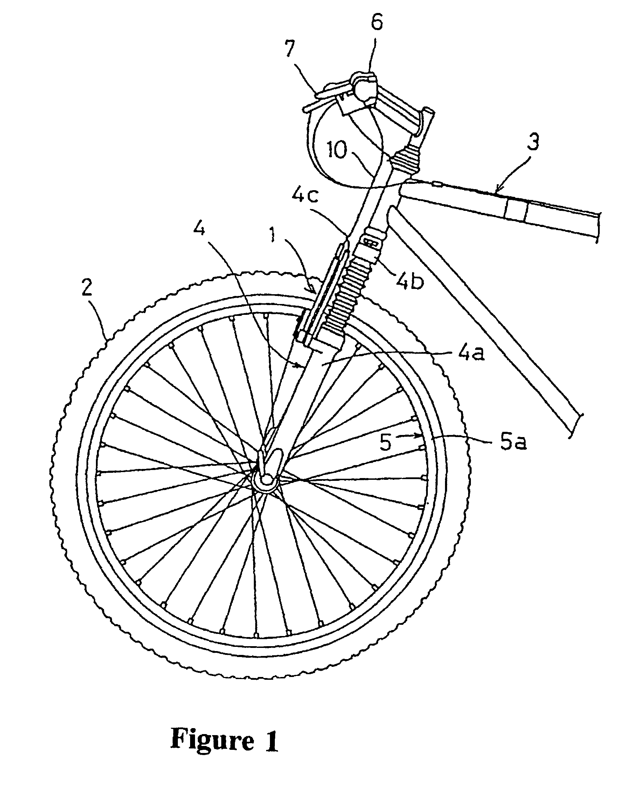

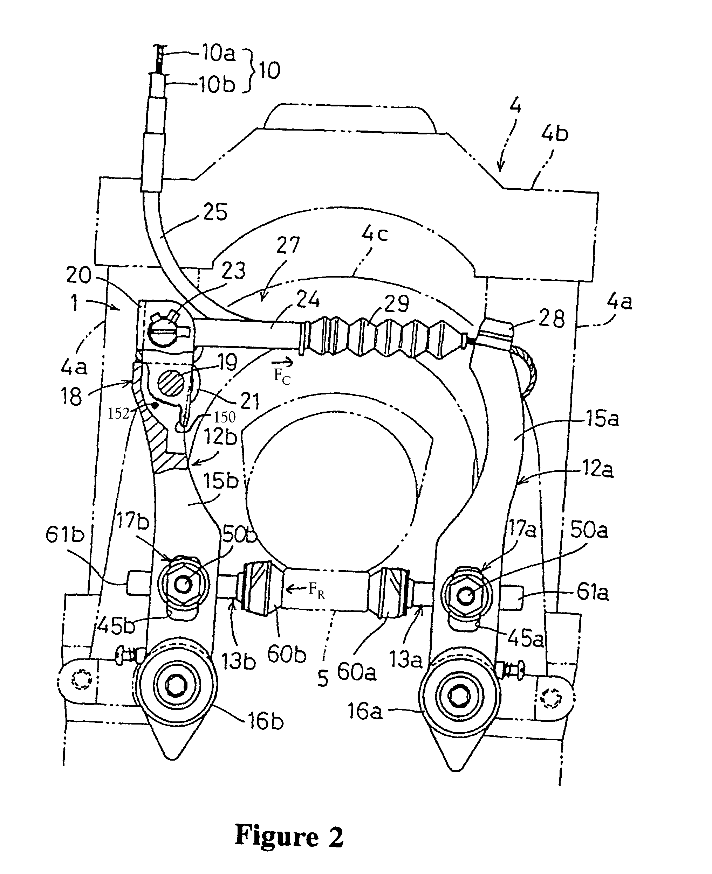

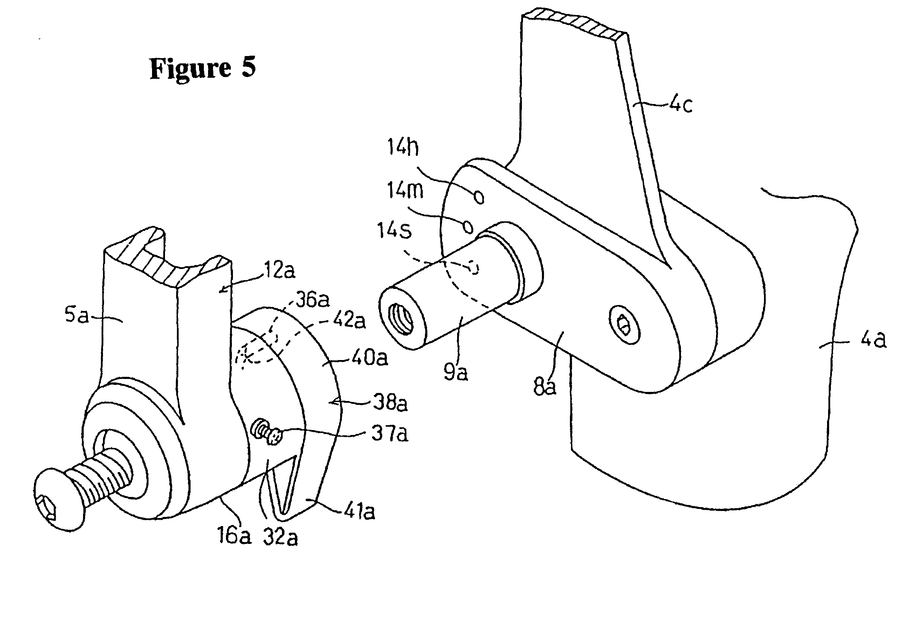

In Figures 1 and 2, a side-pull cantilevered brake device 1 pertaining to an embodiment of the present invention is used for a front wheel, for example, and displays a braking action when pressed against both lateral surfaces 5a of the rim 5 of a front wheel 2. The brake device 1 is swingably supported by the front fork 4 of a frame 3. The front fork 4 is an air/oil or elastomer type of suspension fork, for example, which allows shocks from the road surface to be absorbed. The front fork 4 has a pair of left and right suspension components 4a, an attachment component 4b that is used to attach the pair of suspension components 4a, and a stabilizer 4c that is used to reinforce the suspension components 4a. The stabilizer 4c branches into a shape resembling an inverted U, is fixed at its lower ends at some point along the suspension components 4a, and has a pair of left and right seats 8a and 8b at its two lower ends. As shown in Figure 5, these seats 8a and 8b are provided with forward-protruding, stepped fixing pins 9a and 9b, respectively (only 9a is shown in the figure). The seats 8a and 8b are also provided with three stop holes 14h, 14m, and 14s that are arranged in a circular arc centering on the fixing pins 9a and 9b and that are used to stop a brake release-use torsion coil spring (discussed below) provided to the brake device 1.

As shown in Figures 1 through 3, the brake device 1 is linked to the distal end of an operating cable 10, the base end of which is linked to a brake lever 7 provided to the handlebar 6. The operating cable 10 has an inner cable 10a, the base end of which is stopped at the brake lever 7, and an outer casing 10b that is stopped at the attachment frame of the brake lever 7 and through the inside of which the inner cable 10a moves.

The brake device 1 has a pair of left and right brake links 12a and 12b that swing. Brake shoes 13a and 13b are attached facing each other at some point along the brake links 12a and 12b such that they can be adjusted. Brake shoes 13a and 13b receive the brake resistive force F_{R} from contact between the brake pads and the lateral surfaces 5a of the rim 5. The brake links 12a and 12b have link bodies 15a and 15b, respectively, in the form of plates that extend upward and have been thinned on their back side. Rotational support components 16a and 16b that are rotatably supported on the fixing pins 9a and 9b extending from the seats 8a and 8b are provided to the base ends of the link bodies 15a and 15b. In the middle portions are provided shoe attachment components 17a and 17b that are used to attach the brake shoes 13a and 13b.

A bracket 15c with a C-shaped cross section is formed on the distal end of the link body 15b. A braking characteristic variation means 18 is provided to this bracket 15c. As shown in Figures 2 through 4, the braking characteristic variation means 18 has a swing link 20 that is swingably supported by a swing shaft 19 fitted in the longitudinal direction to the bracket 15c, a torsion coil spring 21 that energizes the swing link 20, and a movement cam 22 that adjusts the biasing force (spring force) of the torsion coil spring 21.

The swing link 20 is a member with a C-shaped cross section, the lower portion of which is supported by the swing shaft 19, and to the upper portion of which is fitted in the longitudinal direction a linking shaft 23. A cable hook 24 that is used to keep the operating cable 10 from jutting out too much from the device 1 is rotatably linked to the linking shaft 23. Cable hook 24 receives a brake control force F_{C} from operating cable 10. The distal end of a tubular inner guide 25 that is curved at approximately 90 degrees and that is used to prevent the kinking of the operating cable 10 is attached to this cable hook 24. The outer casing 10b of the operating cable 10 is attached to the base end of the inner guide 25. The cable hook 24 and inner guide 25 constitute a first stop component 27.

The torsion coil spring 21 is wound around the outer periphery of a tubular spring guide 26 fitted on the outer peripheral side of the swing shaft 19. One end of the torsion coil spring 21 extends in a curve slightly to the outside, and this end 21a is attached to the bracket 15c. The other end of the torsion coil spring 21 curves around toward the outside for 90 degrees, and then curves slightly back in the opposite direction, and this curved end 21b is attached to one of the three cam faces 22a through 22c formed on the outer periphery of the movement cam 22.

The movement cam 22 is non-rotatably mounted on the linking shaft 23. A large-diameter flange 23a is formed at the front end of the linking shaft 23, and a tool engaging groove 23b used for rotational operation is formed on the front surface of the flange 23a. An anti-rotation component 23c that has a square cross section is formed at the rear end of the linking shaft 23, and the movement cam 22 is non-rotatably mounted thereto. The three cam faces 22a through 22c are formed on the outer peripheral surface of the movement cam 22. The distance from the center of the linking shaft 23 to each of the cam faces 22a through 22c gradually increases. Each of the cam faces 22a through 22c is slightly concave so as to match the curve of the end 21b of the torsion coil spring 21.

A second stop component 28 that attaches the inner cable 10a is provided to the distal end of the link body 15a. The inner cable 10a is passed through the inside of the inner guide 25 and is fastened by a screw to the second stop component 28 at the distal end of the link body 15a. An expanding and contracting bellows 29 that is used to protect the inner cable 10a is positioned between the cable hook 24 and the second stop component 28.

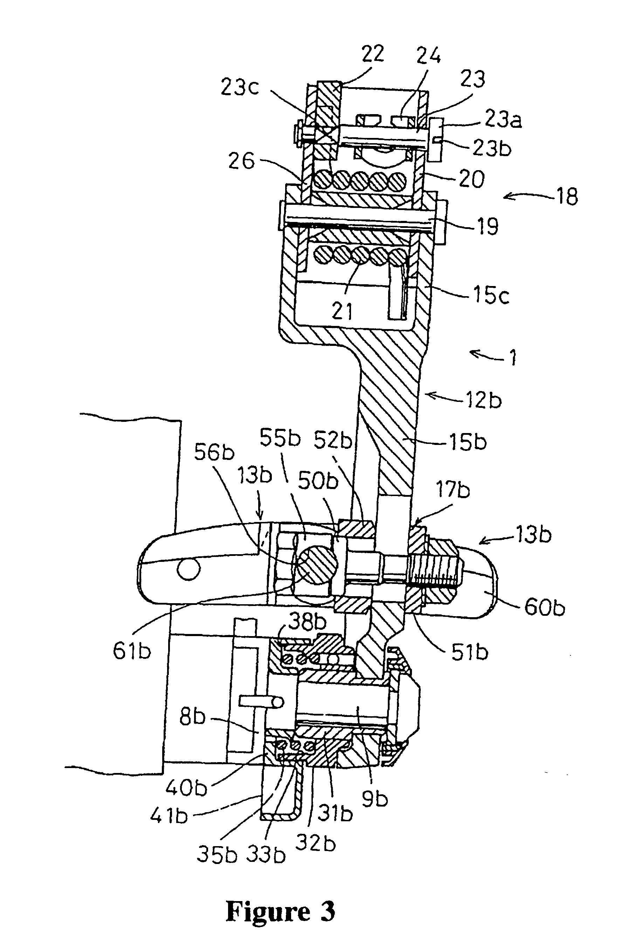

Rotational support components 16a and 16b, as shown in Figure 3 (only the b side is shown), have tubular bushings 31a a and 31b that are flared and fixed to the base ends of the link bodies 15a and 15b and that are fitted to the fixing pins 9a and 9b. Spring covers 32a and 32b in the form of bottomed hollow cylinders are fixed to the outer periphery of the bushings 31a and 31b. Tubular spaces 33a and 33b are formed between the spring covers 32a and 32b and the bushings 31a and 31b, and torsion coil springs 35a and 35b that energize the brake links 12a and 12b to the brake release side are housed within these spaces 33a and 33b.

The rear ends 36a and 36b of the torsion coil springs 35a and 35b, as shown in Figure 5 (only the a side is shown), are attached to one of the three attachment holes 14h through 14s provided to the seats 8a and 8b. Changing the attachment position at these attachment holes 14h through 14s allows the force to the brake release side to be adjusted to three levels. Also, the front ends (not shown) are attached to the bottoms of the spring covers 32a and 32b. The front end attachment positions of the torsion coil springs 35a and 35b of the brake links 12a and 12b can be moved in the peripheral direction of the fixing pins 9a and 9b by means of spring adjusting screws 37a and 37b that are threaded into the outer surfaces of the spring covers 32a and 32b.

Spring caps 38a and 38b that cover the rear ends of the torsion coil springs 35a and 35b are rotatably mounted to the rear of the spring covers 32a and 32b. The spring caps 38a and 38b have cylindrical components 40a and 40b that are fitted to the large diameter portion of the fixing pins 9a and 9b, and rotational operation components 41a and 41b that protrude outward in a triangle from the peripheral surface of the cylindrical components 40a and 40b. Through holes 42a and 42b (only the a side is shown in Figure 5), through which the rear ends 36a and 36b of the torsion coil springs 35a and 35b pass, are formed in the bottom surfaces of the spring caps 38a and 38b, making it possible to attach the rear ends of the torsion coil springs 35a and 35b.

Thus providing the spring caps 38a and 38b allows the rear ends 36a and 36b of the torsion coil springs 35a and 35b to be disposed in any desired position by turning the spring caps 38a and 38b. Accordingly, even when there is a limit to the rotation of the brake link 12a, and the rear ends 36a and 36b of the torsion coil springs 35a and 35b cannot be inserted into the desired stop holes 14h through 14s in a natural state, the rear ends 36a and 36b can be easily inserted into the stop holes 14h through 14s merely by turning the spring caps 38a and 38b. Also, since the attachment angle of the spring caps 38a and 38b (the orientation of the distal ends of the spring caps 38a and 38b) varies with the location where the torsion coil springs 35a and 35b are attached to the stop holes 14h through 14s, the stop position of the torsion coil springs 35a and 35b, that is, the level of force to the brake release side, can be easily ascertained from the orientation of the spring caps 38a and 38b. For instance, the distal ends of the spring caps 38a and 38b will face down when the torsion coil springs 35a and 35b are attached to the stop holes 14m, will face diagonally inward when the torsion coil springs 35a and 35b are attached to the stop holes 14h, and will face diagonally outward when the torsion coil springs 35a and 35b are attached to the stop holes 14s, so the level of the force at which the brakes are returned to the release side can be easily ascertained from the orientation of the spring caps 38a and 38b.

As shown in Figures 2 and 3, the shoe attachment components 17a and 17b have shoe attachment bolts 50a and 50b that are inserted from the rear into slots 45a and 45b made in the center of the link bodies 15a and 15b, and washers 51a and 51b and collars 52a and 52b that are fitted to the shoe attachment bolts 50a and 50b such that they sandwich the link bodies 15a and 15b. Shoe attachment holes 56a and 56b are made in the left and right direction (perpendicular to the page in Figure 3) in the heads 55a and 55b of the shoe attachment bolts 50a and 50b positioned at the rear of the link bodies 15a and 15b.

The brake shoes 13a and 13b have rubber shoe bodies 60a and 60b, and shoe attachment pins 61a and 61b that extend outward from the approximate center in the longitudinal direction of the shoe bodies 60a and 60b. The shoe bodies 60a and 60b are thinner than in the past, and are designed to deform during braking. The shoe attachment pins 61a and 61b can be inserted into the shoe attachment holes 56a and 56b made in the shoe attachment bolts 50a and 50b. Brake shoes 13a and 13b are disposed on the front fork 4 side (to the rear of) the brake links 12a and 12b, so the distance from the front fork 4 is short, and there is less moment caused by the rebound from the rim 5 that acts on the brake shoes 13a and 13b. Accordingly, twisting of the fork will not readily decrease the braking force even if a suspension fork with relatively low torsional rigidity is used. Also, since the shoe bodies 60a and 60b are themselves thinner, there is less bending distortion of the shoe bodies 60a and 60b during braking, and even less decrease in braking force.

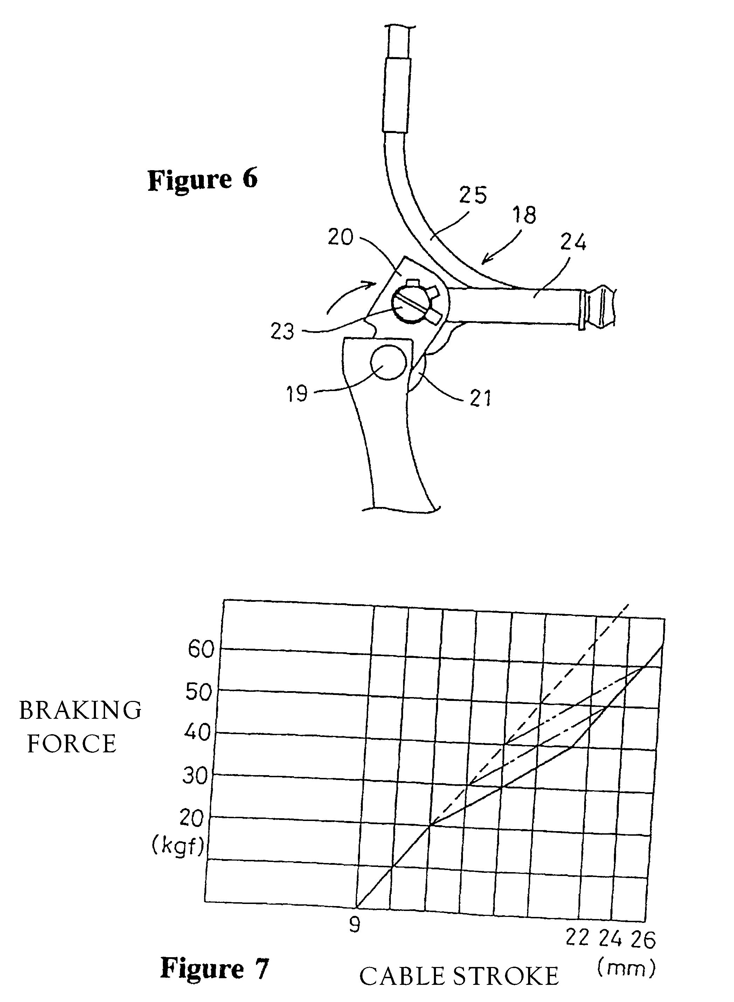

Operation of the brake device 1 during braking will now be described.
When the rider operates the brake lever 7, the inner cable 10a is pulled into the outer casing 10b, the brake links 12a and 12b swing in their respective closing directions against the biasing force of the torsion coil springs 35a and 35b, and the shoe bodies 60a and 60b of the brake shoes 13a and 13b hit the lateral surfaces 5a of the rim 5. A braking force is generated when the shoe bodies 60a and 60b contact the lateral surfaces 5a. The braking force generated here is proportional to the amount of movement of the inner cable 10a (the cable stroke), as shown in Figure 7. When the inner cable 10a is pulled further until the operating force of the inner cable 10a thus generated (the tension on the inner cable 10a) exceeds the initial biasing force of the torsion coil spring 21 of the braking characteristic variation means 18 (i.e., when the net result of forces F_{C} and F_{R} between swing link 20 and link body 15b at shaft 19 exceeds the initial biasing force of spring 21), then the torsion coil spring 21 bends and the swing link 20 swings to the first stop component 27 side, as shown in Figure 6. When the swing link 20 swings, as shown in Figure 7, the generated braking force corresponds to the biasing force of the torsion coil spring 21, which increases with bending, and there is less change in the braking characteristic, that is, in the braking force with respect to the cable stroke (the slope of the straight line in Figure 7). As a result, there is less change in braking force with respect to the operation of the brake lever 7. Therefore, even if the brake lever is operated excessively by a novice who is unfamiliar with the brake operation, the braking force will not increase that much, making the brake easier to operate. The swinging of the swing link 20 is complete when an abutment 150 on the swing link 20 contacts a corresponding abutment 152 in the form of a stop pin on the link body. Upon completion of this swinging, the braking characteristic returns to its original large value, and a powerful braking force is obtained.

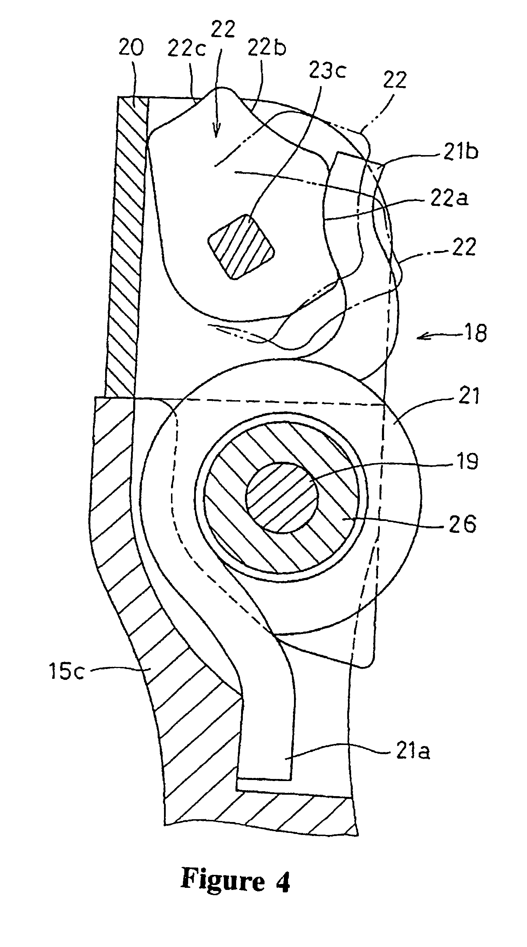

For a novice, the movement cam 22 should be put in the position indicated by the solid lines in Figure 4, the end 21b of the torsion coil spring 21 should be attached to the cam face 22a, and the biasing force should be adjusted so that the braking characteristic will decrease at a low braking force. However, if this adjustment is made with an advanced rider, a high braking force will not be obtained instantly. In this case, the linking shaft 23 should be turned to rotate the movement cam 22, and the end 21b should be attached to the cam face 22b, as shown by the one-dot chain line in Figure 4, or should be attached to the cam face 22c, as shown by the two-dot chain line. When the movement cam 22 is thus rotated, the end 21b of the torsion coil spring 21 moves in the winding direction of the spring and the biasing force increases. As a result, the braking force at the point when the swing link 20 begins to swing shifts in steps to the larger side, as shown by the one- or two-dot chain line in Figure 7. Accordingly, a high braking force is obtained at a short cable stroke. In particular, the braking effect is highest in the skid region (the region of imminent wheel lock-up), so if the braking characteristic is designed to be smaller in this skid region, the cable stroke (the amount the brake lever is operated) at this point will be longer, and the brakes will be easier to operate in the skid region.

When the brake lever 7 is released, the inner cable 10a slackens, the biasing force of the torsion coil springs 35a and 35b causes the brake links 12a and 12b to swing in the opening directions, the distal ends of the shoe bodies 60a and 60b of the brake shoes 13a and 13b move away from the lateral surfaces 5a of the rim, and the braking is released.

Since the braking characteristic can be adjusted in small increments on the brake device 1 side during braking by means of the torsion coil spring 21 and the swing link 20 provided to the link body 15b, the desired braking characteristic corresponding to the brake device 1 can be reliably obtained during braking. Also, since no extra devices are provided to the operating cable 10, the operating cable 10 is easy to lay out.

In the mounting of the brake device 1 to the fixing pins 9a and 9b, the rotational support components 16a and 16b are fitted to the fixing pins 9a and 9b, and the rotational operation components 41a and 41b are gripped with the fingers to position the rear ends 36a and 36b of the torsion coil springs 35a and 35b at the desired stop holes 14h through 14s. If the rotational support components 16a and 16b are fitted all the way back in this state, the rear ends 36a and 36b can be inserted into stop holes 14h through 14s.

Since the brake shoes 13a and 13b are disposed on the front fork 4 side of the brake links 12a and 12b in order to maintain a high braking force, the rear ends of the shoe bodies 60a and 60b hit the stabilizer 4c, which limits the rotation of the brake links 12a and 12b to the brake release side. However, since the stop position of the rear ends 36a and 36b of the torsion coil springs 35a and 35b can be freely varied by means of the rotational operation components 41a and 41b, one end of the torsion coil springs 35a and 35b can be reliably inserted into one of the stop holes 14h through 14s even if the rotation of the brake links 12a and 12b is limited.

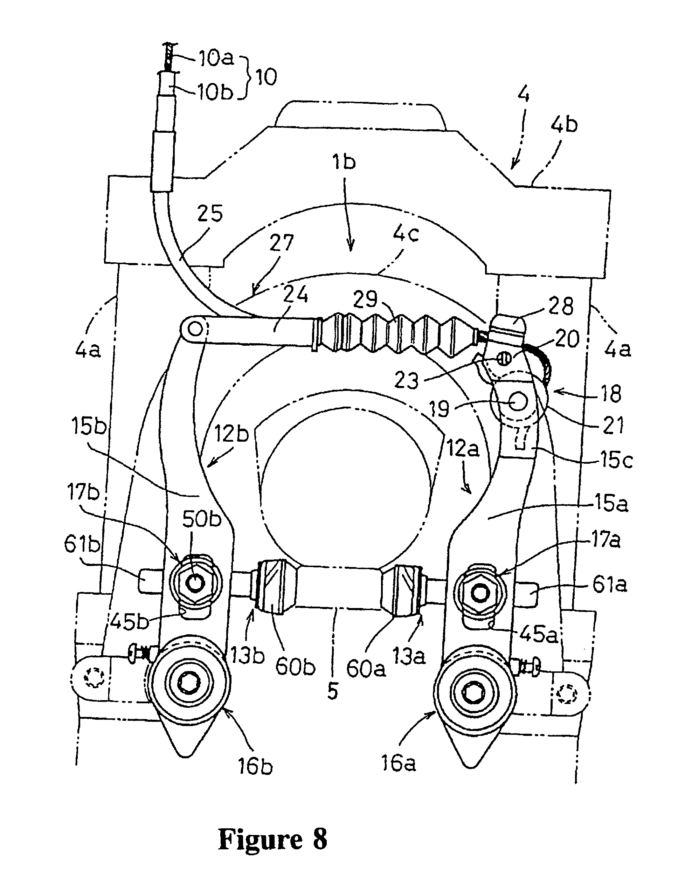

As shown in Figure 8, the braking characteristic variation means 18 may be provided to the link body 15a side rather than to the link body 15b side as in the embodiment shown in Figure 2. With the brake device 1b in this embodiment, the cable hook 24 is rotatably linked to the distal end of the link body 15b, and the bracket 15c is formed at the distal end of the link body 15a. As with the embodiment shown in Figure 2, the braking characteristic variation means 18 has a swing link 20 that is swingably supported on a swing shaft 19 that is fitted in the longitudinal direction to the bracket 15c, a torsion coil spring 21 that energizes the swing link 20 inward, and a movement cam (not shown) that adjusts the biasing force (spring force) of the torsion coil spring 21. The rest of the structure and operation in this embodiment is the same as the embodiment shown in Figure 2, so its description will be omitted. This embodiment has the same merits as the embodiment shown in Figure 2.

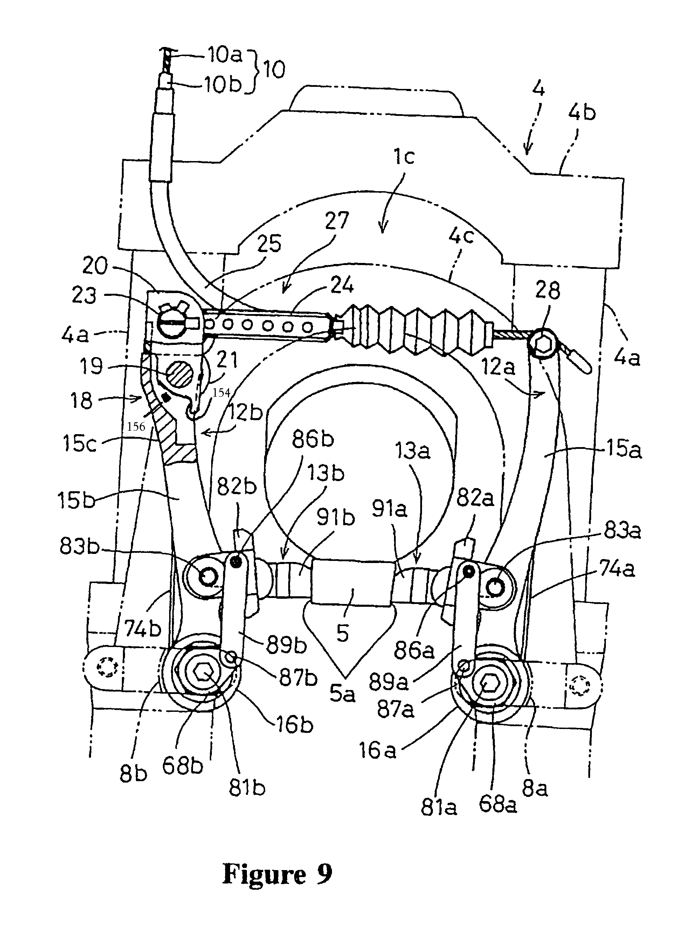

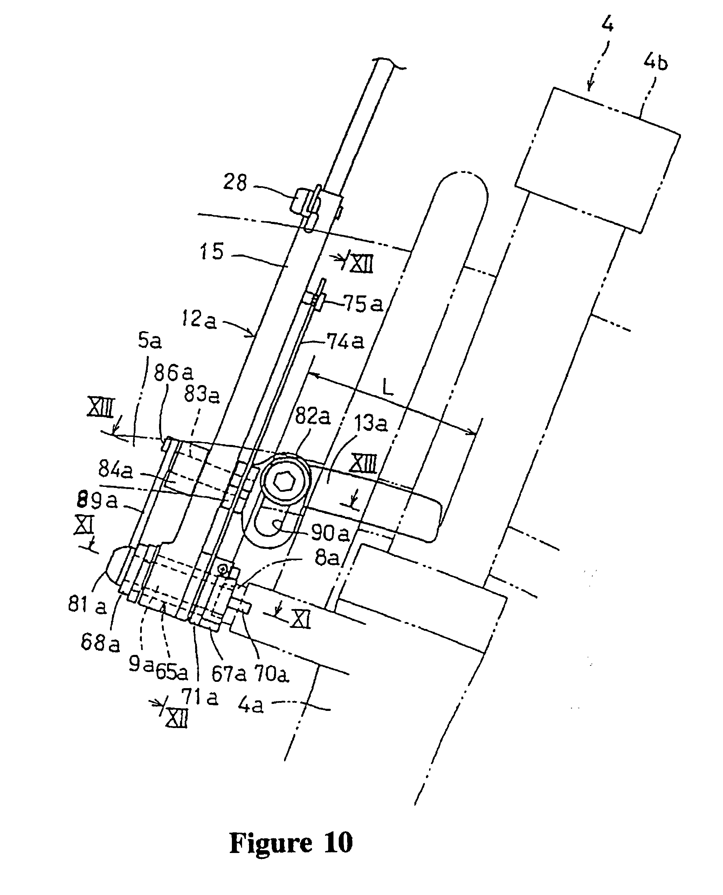

With the above two embodiments, the attitude of the brake shoes 13a and 13b varied with the swinging, but the braking characteristic variation means 18 may also be provided to a brake device 1c having shoe attachment components 17a and 17b with a four-link structure, as shown in Figures 9 and 10. Figure 10 and subsequent figures show only the left-side members (the right-side member is shown in Figure 9).

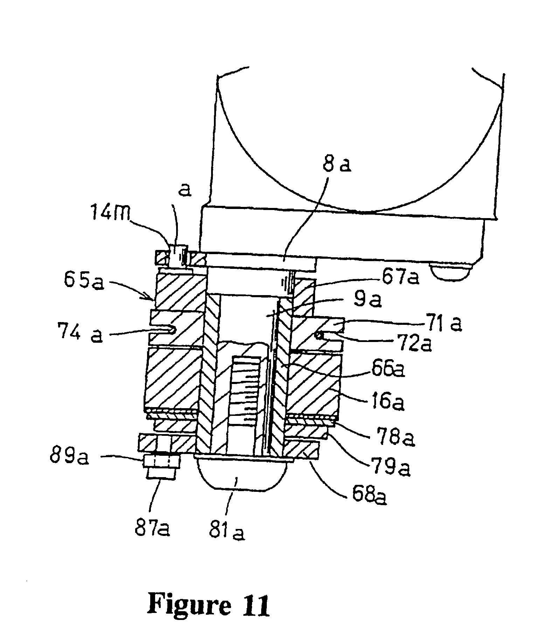

As shown in Figures 9 and 10, such a brake device 1c has a pair of left and right swinging brake links 12a and 12b. Shoe attachment components 17a and 17b that are used to attach the brake shoes 13a and 13b are provided to the lower portions of the brake links 12a and 12b. The brake links 12a and 12b have link bodies 15a and 15b, respectively, that are in the form of plates which extend upward. Rotational support components 16a and 16b are provided to the base ends of the link bodies 15a and 15b. As shown in Figure 11, the rotational support components 16a and 16b are rotatably supported on link bases 65a and 65b that are non-rotatably fitted to the fixing pins 9a and 9b extending from the seats 8a and 8b. A bracket 15c is formed at the distal end of the link body 15a, and a braking characteristic variation means 18 is provided to the bracket 15c. This structure is the same as in the embodiment shown in Figure 2, so its description will be omitted. A second attachment component 28 is provided to the distal end of the link body 15b.

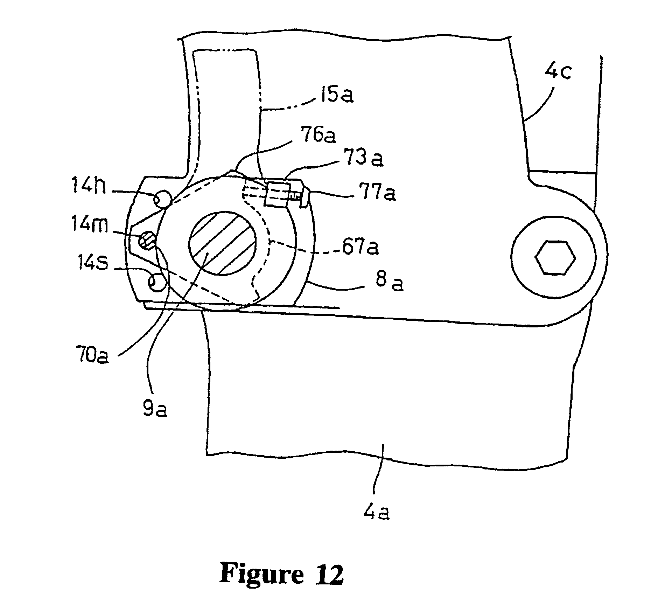

The link bases 65a and 65b are disposed around the outer periphery of the fixing pins 9a and 9b. Link bases 65a and 65b have tubular components 66a and 66b, the base ends of which hit the stepped portions of the fixing pins 9a and 9b. Stop components 67a and 67b that are fitted and fixed to the base end outer periphery of the tubular components 66a and 66b. Teardrop-shaped arms 68a and 68b are fitted and fixed to the distal end outer periphery. The rotational support components 16a and 16b of the link bodies 15a and 15b are rotatably supported by these tubular components 66a and 66b. The stop components 67a and 67b are roughly triangularly shaped members, as shown in Figure 12, the insides of which are provided with stop pins 70a and 70b that go through one of the stop holes 14h through 14s. Passing these stop pins 70a and 70b through one of the stop holes 14h through 14s maintains the specified attachment attitude of the link bases 65a and 65b.

Spring holders 71a and 71b are provided between the link bodies 15a and 15b and the stop components 67a and 67b (Figure 11) around the outer periphery of the link bases 65a and 65b. The spring holders 71a and 71b have grooves 72a and 72b formed in the peripheral direction, and adjustment components 73a and 73b (Figure 12) are located on the outer periphery. The base ends of return springs 74a and 74b are wound and fixed inside the grooves 72a and 72b. The distal ends of the return springs 74a and 74b extend upward, and are stopped by stop pins 75a and 75b (Figure 10) that protrude from the back side in the middle of the link bodies 15a and 15b. The return springs 74a and 74b bias the link bodies 15a and 15b so that they rotate outward. Adjustment screws 77a and 77b capable of hitting protrusions 76a and 76b formed on the outer periphery of the stop components 67a and 67b are threaded into the adjustment components 73a and 73b. The attitude of the left and right brake-links 12a and 12b is adjusted by moving these adjustment screws 77a and 77b in or out, and this allows the gap between the left and right brake shoes 13a and 13b and the lateral surfaces 5a of the rim 5 to be adjusted.

Pairs of lock nuts 78a and 78b and 79a and 79b (Figure 11) are threaded around the outer periphery of the link bases 65a and 65b between the rotational support components 16a and 16b and the arms 68a and 68b. The lock nuts 78a, 78b, 79a, and 79b serve to restrict the movement of the rotational support components 16a and 16b in the axial direction. Attachment bolts 81a and 81b are fastened to the distal ends of the fixing pins 9a and 9b. The attachment bolts 81a and 81b serve to suppress movement of the link bases 65a and 65b in the axial direction.

As shown in Figures 9 and 10, shoe mounting links 82a and 82b, which constitute the shoe attachment components 17a and 17b that are used to attach the brake shoes 13a and 13b to the brake device 1, are attached nearly horizontally to the middle portion in the vertical direction of the link bodies 15a and 15b. The shoe mounting links 82a and 82b are rotatably linked to the link bodies 15a and 15b by attachment pins 83a and 83b that pass through these components.

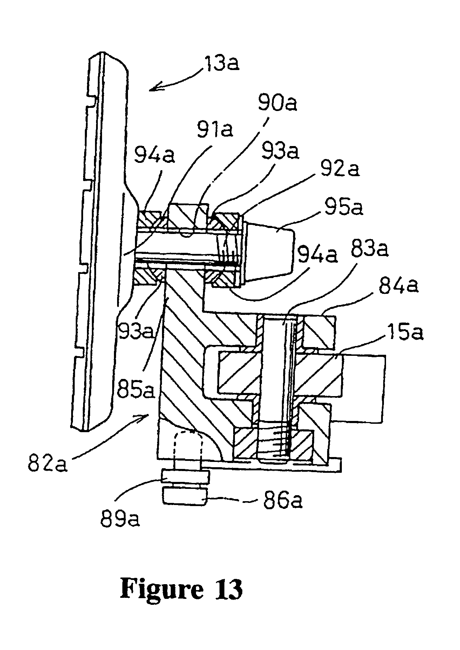

As shown in Figure 13, the shoe mounting links 82a and 82b have link attachment components 84a and 84b that are formed in a U shape so as to sandwich both sides of the link bodies 15a and 15b, and shoe mounting components 85a and 85b that extend at a right angle from the link attachment components 84a and 84b. The attachment pins 83a and 83b are attached to the link attachment components 84a and 84b, and support pins 86a and 86b are fixed thereto. The upper ends of auxiliary links 89a and 89b are rotatably supported by these support pins 86a and 86b. Thus, the shoe mounting links 82a and 82b and the link bodies 15a and 15b are linked such that the link bodies 15a and 15b are sandwiched, and this raises the rigidity of the linked portion and allows undercutting of the brake shoes 13a and 13b to be suppressed. Shoe mounting slots 90a and 90b that are longer in the vertical direction (the direction perpendicular to the page in Figure 13) are formed in the mounting components 85a and 85b. As shown in Figure 10, these shoe mounting slots 90a and 90b are formed such that the distance L between the rear ends of the brake shoes 13a and 13b and the stepped portions of the fixing pins 9a and 9b is at least 25 mm. Disposing the shoe mounting slots 90a and 90b in these positions makes the braking center closer to the center of the front fork 4 and reduces the moment generated by rebound. Accordingly, the force that acts on the front fork 4 is weaker and the rigidity of the brake device is higher.

As shown in Figure 9, the auxiliary links 89a and 89b are flat members arranged parallel to the link bodies 15a and 15b, and their upper ends are rotatably linked to the front surfaces of the link attachment components 84a and 84b of the shoe mounting links 82a and 82b by the support pins 86a and 86b. Their lower ends, as shown in Figures 10 and 11, are rotatably linked to the link bases 65a and 65b by support pins 87a and 87b that are attached to the distal ends of the arms 68a and 68b. The distance from the axis of the fixing pins 9a and 9b to the axis of the support pins 87a and 87b is equal to the distance from the axis of the attachment pins 83a and 83b to the axis of the support pins 86a and 86b. Also, the distance from the axis of the support pins 86a and 86b positioned at both ends of the auxiliary links 89a and 89b to the axis of the support pins 87a and 87b is equal to the distance from the axis of the fixing pins 9a and 9b to the axis of the attachment pins 83a and 83b. Specifically, part of the link bodies 15a and 15b between these pins, the link bases 65a and 65b, part of the shoe mounting links 82a and 82b, and the auxiliary links 89a and 89b constitute a four-bar link mechanism. Accordingly, the shoe mounting links 82a and 82b move parallel to the line segment that connects the axis of the fixing pins 9a and 9b to the axis of the support pins 87a and 87b.

As shown in Figure 13, the brake shoes 13a and 13b are inserted into the shoe mounting slots 90a and 90b. The brake shoes 13a and 13b respectively have rubber shoe bodies 91a and 91b and shoe attachment pins 92a and 92b that extend outward from the approximate center in the longitudinal direction of the shoe bodies 91a and 91b. External threads are formed at the distal ends of the shoe attachment pins 92a and 92b, and the mounting components 85a and 85b are fixed by nuts 95a and 95b that thread onto these external threads. Convex washers 93a and 93b, which have convex surfaces that form a partial spherical surface, and concave washers 94a and 94b, which have concave surfaces that mesh with the convex surfaces, are positioned between the nuts 95a and 95b and the mounting components 85a and 85b, and between the shoe bodies 91a and 91b and the mounting components 85a and 85b. Here, fastening the brake shoes 13a and 13b inside the shoe mounting slots 90a and 90b of the mounting components 85a and 85b with the convex washers 93a and 93b and the concave washers 94a and 94b interposed allows the vertical position and inclination of the brake shoes 13a and 13b to be freely adjusted so as to match the position and inclination of the lateral surfaces 5a of the rim 5.

The operation of this embodiment will now be described.

When the rider operates the brake lever 7, the inner cable 10a is pulled into the outer casing 10b, the brake links 12a and 12b swing in their respective closing directions against the biasing force of the return springs 74a and 74b, and the shoe bodies 91a and 91b of the brake shoes 13a and 13b hit the lateral surfaces 5a of the rim 5. At this point, the action of the link mechanism, including the auxiliary links 89a and 89b, causes the shoe mounting links 82a and 82b to move to the inside in a state in which the specified attitude is maintained. As a result, the shoe bodies 91a and 91b reliably hit the rim 5, and a powerful braking force can be obtained. Since these auxiliary links 89a and 89b are positioned to the inside of the link bodies 15a and 15b, the brake device 1c is compact in its width dimensions. As a result, the brake device 1c does not stick out from the front fork 4, for example, so it will not hit the leg of the rider or other parts during its operation. Furthermore, even if the shoe bodies 91a and 91b are subjected to the action of rebound, sufficient braking force will be obtained because the specified attitude of the link bases 65a and 65b is maintained by the stop pins 70a and 70b.

A braking force is generated when the shoe bodies 91a and 91b hit the lateral surfaces 5a. The braking force generated here is proportional to the amount of movement of the inner cable 10a (the cable stroke). When the inner cable 10a is pulled further until the operating force of the inner cable 10a thus generated exceeds the biasing force of the torsion coil spring 21, then the torsion coil spring 21 bends and the swing link 20 swings to the first stop component 27 side. When the swing link 20 swings, the braking force corresponds to the biasing force, which increases with the bending of the torsion coil spring 21, and there is less change in the braking characteristic. As a result, just as discussed above, there is less change in braking force with respect to the operation of the brake lever 7. Therefore, even if the brake lever is operated excessively by a novice who is unfamiliar with the brake operation, the braking force will not increase that much, making the brake easier to operate. The swinging of the swing link 20 is complete when an abutment 154 on the swing link 20 contacts a corresponding abutment 156 in the form of a stop pin on the link body. Upon completion of this swinging, the braking characteristic returns to its original large value, and a powerful braking force is obtained.

Here again, since the braking characteristic can be adjusted small on the brake device 1c side during braking by means of the torsion coil spring 21 and the swing link 20 provided to the link body 15b, the desired braking characteristic corresponding to the brake device 1c can be reliably obtained during braking. Also, since no extra devices are provided to the operating cable 10, the operating cable 10 is easy to lay out.

When the brake lever 7 is released, the inner cable 10a slackens, the biasing force of the return springs 74a and 74b causes the brake links 12a and 12b to swing in the opening directions, the distal ends of the shoe bodies 91a and 91b of the brake shoes 13a and 13b move away from the lateral surfaces 5a of the rim, and the braking is released.

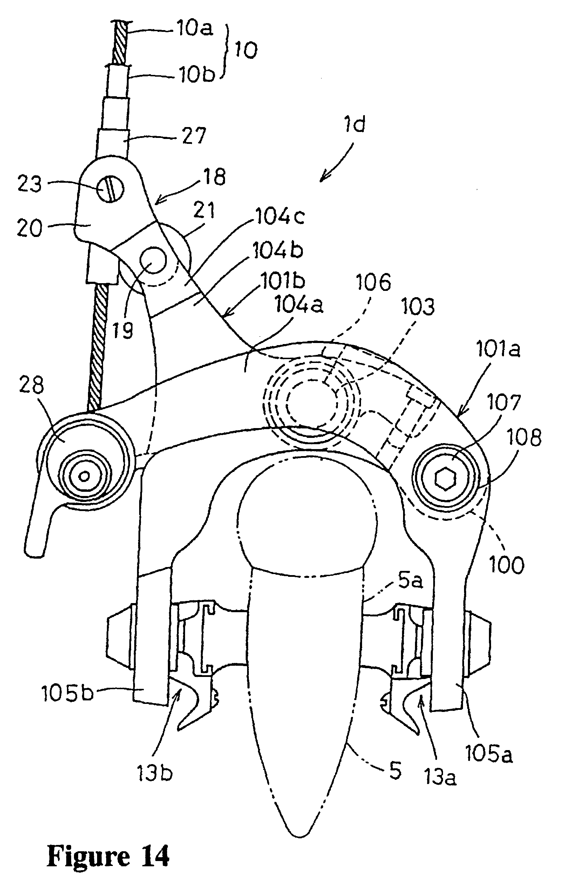

As shown in Figure 14, the braking characteristic variation means may be provided to a caliper type of brake device 1d instead of a cantilevered brake device. In Figure 14, the caliper brake device 1d has a gate component 100, an outer brake link 101a that is swingably linked to the distal end of the gate component 100, an inner brake link 101b that is swingably linked to the base end of the gate component 100, and a biasing member (not shown) that energizes the brake links 101a and 101b to the brake release side. The gate component 100 is a rod-shaped member, and the base end is mounted by a mounting bolt 103 to the front or rear fork of the bicycle. The inner brake link 101b is swingably supported by this mounting bolt 103. The outer brake link 101a has a roughly C-shaped link body 104a, and a shoe attachment component 105a provided to the distal end of the link body 104a. A second attachment component 28 that attaches the inner cable 10a is provided to the base end of the link body 104a. The support component 108 of a support bolt 107 mounted to the distal end of the gate component 100 is provided at a midway position.

The inner brake link 101b has a roughly Y-shaped link body 104b, and a shoe attachment component 105b that is provided to one of the distal ends of the link body 104b. A bracket 104c is formed at the base end (upper end) of the link body 104b, and a braking characteristic variation means 18 is provided to the-bracket 104c. This structure is the same as that discussed above, so its description will be omitted. The support component 106 of the mounting bolt 103 is provided to the other distal end. The brake shoes 13a and 13b are mounted on the shoe attachment components 105a and 105b.

When the brake lever is operated, the inner cable 10a is pulled into the outer casing 10b, the brake links 101a and 101b swing in their respective closing directions against the biasing force of the brake links 101a and 101b, and the brake shoes 13a and 13b hit the lateral surfaces 5a of the rim 5. A braking force is generated when the brake shoes 13a and 13b contact the lateral surfaces 5a, and when the operating force of the inner cable 10a exceeds the biasing force of the torsion coil spring 21, then the swing link 20 swings and the braking characteristic becomes small. This operation is the same as the previous embodiments, and the same merits as in the above embodiments are obtained.

While the above is a description of various embodiments of the present invention, further modifications may be employed without departing from the scope of the present invention as defined by the following claims.

## Claims

1. A brake apparatus comprising:
a brake arm (12a, 12b);
a brake pad coupling component (17a, 17b) disposed on the brake arm (12a, 12b) for receiving a brake resistive force (F_{R}) from contact between a brake pad (13a, 13b) and a wheel rim (5);
a control element coupling component (24, 25, 27, 28) coupled to the brake arm (12a, 12b) for receiving a brake control force (F_{C}) from a control element (10);
a brake force control mechanism (18) for allowing relative movement between the brake pad coupling component (17a, 17b) and the control element coupling component (24, 25, 27, 28) when both the brake resistive force (F_{R}) and the brake control force (F_{C}) exceed particular nonzero values, the brake force control mechanism (18) including a biasing mechanism (19, 20, 21, 22, 23, 101, 103) that is capable of varying the braking force of the apparatus during braking;
**characterised in that** the brake force control mechanism (18) is coupled between the brake pad coupling component (17a, 17b) and the control element coupling component (24, 25, 27, 28); and **in that** the brake force control mechanism (18) comprises a swing link (20) swingably coupled between the brake arm (12a, 12b) and the control element coupling component (24, 25, 27, 28);
and wherein the biasing mechanism (21) biases the swing link (20) to an initial position so that the swing link (20) remains in the initial position until both the brake resistive force (F_{R}) and the brake control force (F_{C}) exceed the particular nonzero values.

2. Brake Apparatus according to claim 1, wherein the brake arm (12a, 12b) includes a pivot coupling portion (16a, 16b) disposed on one of an upper portion and a lower portion of the brake arm (12a, 12b) for pivotably coupling the brake arm (12a, 12b) to a mounting member (8a, 8b, 9a, 9b), wherein the brake pad coupling component (17a, 17b) is disposed on an intermediate portion of the brake arm (12a, 12b), and wherein the control element coupling component (24, 25, 27, 28) is disposed on the other one of the upper portion and the lower portion of the brake arm (12a, 12b).

3. Brake Apparatus according to either preceding claim, wherein the brake pad coupling component (17a, 17b) comprises a shoe attachment component (17a, 17b) formed on an intermediate portion of the brake arm (12a, 12b).

4. Brake Apparatus according to claim 1, wherein the brake pad coupling component (17a, 17b) is disposed on one of an upper portion and a lower portion of the brake arm (12a, 12b), wherein the control element coupling component (24, 25, 27, 28) is disposed on the other one of the upper portion and the lower portion of the brake arm (12a, 12b), and wherein the brake arm (12a, 12b) includes a pivot coupling portion (16a, 16b) disposed on an intermediate portion of the brake arm (12a, 12b) for pivotably coupling the brake arm (12a, 12b) to a mounting member (8a, 8b, 9a, 9b).

5. Brake Apparatus according to any preceding claim, wherein the brake force control mechanism (18) is disposed in close proximity to the control element coupling component (24, 25, 27, 28).

6. Brake Apparatus according to any preceding claim, wherein the brake force control mechanism (18) is disposed on an upper portion of the brake arm (12a, 12b).

7. Brake Apparatus according to any preceding claim, wherein the brake force control mechanism (18) includes a bias force varying mechanism (22) for varying a bias force of the biasing mechanism (19, 20, 21, 22, 23, 101, 103).

8. Brake Apparatus according to any preceding claim, wherein the biasing mechanism comprises a spring (21).

9. Brake Apparatus according to claim 8, wherein the bias force varying mechanism comprises a cam (22) that engages an end (21b) of the spring (21).

10. Brake Apparatus according to claim 9, wherein the end (21b) of the spring (21) is curved, wherein the cam (22) is mounted to a linking shaft (23), and wherein the cam (22) has a plurality of curved cam faces (22a-22c) disposed at different radial distances from the linking shaft (23) for engaging the end (21b) of the spring (21).

11. Brake Apparatus according to any preceding claim, wherein the control element coupling component comprises a cable hook (24) pivotably coupled to the swing link (20).

12. Brake Apparatus according to claim 11, wherein the cable hook (24) is structured for coupling to an inner guide (25) for the control element (10).

13. Brake Apparatus according to any preceding claim, wherein the control element coupling component comprises a screw (28) attached to the swing link (20).

14. Brake Apparatus according to any preceding claim, wherein the brake pad coupling component (17a, 17b) includes an attachment bolt (50a, 50b) for mounting the brake pad (13a, 13b) to the brake pad coupling component (17a, 17b).

15. Brake Apparatus according to any preceding claim, having
first and second brake arms (12a, 12b) that each have a link body (15a, 15b) and the brake pad coupling component (17a, 17b) is provided to the link body (15a, 15b) and is used to attach the brake pads (13a, 13b);
a first stop component (27) that is provided to the first brake arm (12a) and that is used to attach an outer casing (10b) of the control element (10); and
a second stop component (28) that is provided to the second brake arm (12b) and that is used to attach an inner cable (10a) of the control element (10).

16. Brake Apparatus according to claim 15, wherein the swing link (20) is swingably provided to the first brake arm (12a), and the biasing mechanism (21) biases the swing link (20) away from the second stop component (28), and wherein the change in braking force is achieved by swinging the swing link (20). against the biasing force of the biasing mechanism (21) during braking.

17. Brake Apparatus according to claim 15, wherein the swing link (20) is swingably provided to the second brake arm (12b), and the biasing mechanism (21) biases the swing link (20) away from the first stop component (27), and wherein the change in braking force is achieved by swinging the swing link (20) against the biasing force of the biasing mechanism (21) during braking.

18. Brake Apparatus according to claim 16 or claim 17, wherein the apparatus includes brake arm biasing means (35a, 35b, 74a, 74b) for biasing both brake arms (12a, 12b) to a brake release side at a biasing force that is less than that of the biasing mechanism (21).

## Patentansprüche

1. Eine Bremsvorrichtung, die aus folgendem besteht:
einem Bremsarm (12a, 12b);
einer Bremsklotz-Kopplungskomponente (17a, 17b), die auf dem Bremsarm (12a, 12b) angebracht ist, um eine durch Kontakt zwischen einem Bremsklotz (13a, 13b) und einer Radfelge (5) erzeugten Bremswiderstandskraft (F_{R}) zu empfangen;
einer Steuerelement-Kopplungskomponente (24, 25, 27, 28), die mit dem Bremsarm (12a, 12b) gekoppelt ist, um eine Bremssteuerkraft (F_{C}) aus einem Steuerelement (10) zu empfangen;
einem Bremskraftsteuermechanismus (18), um relative Bewegung zwischen der Bremsklotz-Kopplungskomponente (17a, 17b) und der Steuerelement-Kopplungskomponente (24, 25, 27, 28) zu ermöglichen, wenn die Bremswiderstandskraft (F_{R}) und die Bremssteuerkraft (F_{C}) bestimmte Nicht-Nullwerte überschreiten, wobei der Bremskraftsteuermechanismus (18) einen Verschiebmechanismus (19, 20, 21, 22, 23, 101, 103), der die Bremskraft der Vorrichtung während des Bremsens variieren kann, umfasst;
**dadurch gekennzeichnet, dass** der Bremskraftsteuermechanismus (18) zwischen der Bremsklotz-Kopplungskomponente (17a, 17b) und der Steuerelement-Kopplungskomponente (24, 25, 27, 28) gekoppelt ist; und dass der Bremskraftsteuermechanismus (18) aus einer Schwenkverbindung (20), die schwenkbar zwischen dem Bremsarm (12a, 12b) und der Steuerelement-Kopplungskomponente (24, 25, 27, 28) gekoppelt ist, besteht;
und wobei der Verschiebmechanismus (21) die Schwenkverbindung (20) in eine Ausgangsstellung verschiebt, so dass die Schwenkverbindung (20) in der Ausgangsstellung bleibt, bis die Bremswiderstandskraft (F_{R}) und die Bremssteuerkraft (F_{C}) die bestimmten Nicht-Nullwerte überschreiten.

2. Bremsvorrichtung gemäß Anspruch 1, wobei der Bremsarm (12a, 12b) einen Schwenk-Kopplungsabschnitt (16a, 16b), der auf einem oberen Abschnitt oder einem unteren Abschnitt des Bremsarms (12a, 12b) angebracht ist, zum schwenkbaren Koppeln des Bremsarms (12a, 12b) mit einem Montageteil (8a, 8b, 9a, 9b) umfasst, wobei die Bremsklotz-Kopplungskomponente (17a, 17b) auf einem Zwischenabschnitt des Bremsarms (12a, 12b) angebracht ist, und wobei die Steuerelement-Kopplungskomponente (24, 25, 27, 28) auf dem anderen oberen Abschnitt oder unteren Abschnitt des Bremsarms (12a, 12b) angebracht ist.

3. Bremsvorrichtung gemäß einem der vorhergehenden Ansprüche, wobei die Bremsklotz-Kopplungskomponente (17a, 17b) aus einer Schuhbefestigungskomponente (17a, 17b) besteht, die auf einem Zwischenabschnitt des Bremsarms (12a, 12b) gebildet ist.

4. Bremsvorrichtung gemäß Anspruch 1, wobei die Bremsarm-Kopplungskomponente (17a, 17b) auf einem oberen Abschnitt oder einem unteren Abschnitt des Bremsarms (12a, 12b) angebracht ist, wobei die Steuerelement-Kopplungskomponente (24, 25, 27, 28) auf dem anderen oberen Abschnitt oder unteren Abschnitt des Bremsarms (12a, 12b) angebracht ist, und wobei der Bremsarm (12a, 12b) einen Schwenk-Kopplungsabschnitt (16a, 16b) umfasst, der auf einem Zwischenabschnitt des Bremsarms (12a, 12b) angebracht ist, um den Bremsarm (12a, 12b) schwenkbar mit einem Montageteil (8a, 8b, 9a, 9b) zu koppeln.

5. Bremsvorrichtung gemäß einem der vorhergehenden Ansprüche, wobei der Bremskraft-Steuermechanismus (18) in nächster Nähe der Steuerelement-Kopplungskomponente (24, 25, 27, 28) angebracht ist.

6. Bremsvorrichtung gemäß einem der vorhergehenden Ansprüche, wobei der Bremskraft-Steuermechanismus (18) auf einem oberen Abschnitt des Bremsarms (12a, 12b) angebracht ist.

7. Bremsvorrichtung gemäß einem der vorhergehenden Ansprüche, wobei der Bremskraft-Steuermechanismus (18) einen Verschiebkraft-Variierungsmechanismus (22) zum Variieren einer Verschiebkraft des Verschiebmechanismus (19, 20, 21, 22, 23, 101, 103) umfasst.

8. Bremsvorrichtung gemäß einem der vorhergehenden Ansprüche, wobei der Verschiebmechanismus aus einer Feder (21) besteht.

9. Bremsvorrichtung gemäß Anspruch 8, wobei der Verschiebkraft-Variierungsmechanismus aus einer in ein Ende (21b) der Feder (21) eingreifenden Nocke (22) besteht.

10. Bremsvorrichtung gemäß Anspruch 9, wobei das Ende (21b) der Feder (21) gebogen ist, wobei die Nocke (22) auf einer Verbindungswelle (23) montiert ist, und wobei die Nocke (22) eine Vielzahl von gebogenen Nockenflächen (22a - 22c) aufweist, die in unterschiedlichen radialen Abständen zu der Verbindungswelle (23) zum Eingreifen in das Ende (21b) der Feder (21) angebracht sind.

11. Bremsvorrichtung gemäß einem der vorhergehenden Ansprüche, wobei die Steuerelement-Kopplungskomponente aus einem schwenkbar mit der Schwenkverbindung (20) gekoppelten Kabelhaken (24) besteht.

12. Bremsvorrichtung gemäß Anspruch 11, wobei der Kabelhaken (24) für das Koppeln mit einer Innenführung (25) für das Steuerelement (10) konstruiert ist.

13. Bremsvorrichtung gemäß einem der vorhergehenden Ansprüche, wobei die Steuerelement-Kopplungskomponente aus einer an der Schwenkverbindung (20) befestigten Schraube (28) besteht.

14. Bremsvorrichtung gemäß einem der vorhergehenden Ansprüche, wobei die Bremsklotz-Kopplungskomponente (17a, 17b) einen Befestigungsbolzen (50a, 50b) zum Montieren des Bremsklotzes (13a, 13b) an der Bremsklotz-Kopplungskomponente (17a, 17b) umfasst.

15. Bremsvorrichtung gemäß einem der vorhergehenden Ansprüche, die folgendes aufweist:
erste und zweite Bremsarme (12a, 12b), die jeweils einen Verbindungskörper (15a, 15b) aufweisen und wobei die Bremsklotz-Kopplungskomponente (17a, 17b) auf dem Verbindungskörper (15a, 15b) bereitgestellt ist und zum Befestigen der Bremsklötze (13a, 13b) verwendet wird;
eine erste Arretierkomponente (27), die auf dem ersten Bremsarm (12a) bereitgestellt ist und zum Befestigen eines Außengehäuses (10b) des Steuerelements (10) verwendet wird; und
eine zweite Arretierkomponente (28), die auf dem zweiten Bremsarm (12b) bereitgestellt ist und zum Befestigen eines Innenkabels (10b) des Steuerelements (10) verwendet wird.

16. Bremsvorrichtung gemäß Anspruch 15, wobei die Schwenkverbindung (20) schwenkbar auf dem ersten Bremsarm (12a) bereitgestellt ist, und der Verschiebmechanismus (21) die Schwenkverbindung (20) von der zweiten Arretierkomponente (28) weg verschiebt, und wobei das Ändern der Bremskraft durch das Schwenken der Schwenkverbindung (20) gegen die Verschiebkraft des Verschiebmechanismus (21) während des Bremsens bewirkt wird.

17. Bremsvorrichtung gemäß Anspruch 15, wobei die Schwenkverbindung (20) schwenkbar auf dem zweiten Bremsarm (12b) bereitgestellt ist, und der Verschiebmechanismus (21) die Schwenkverbindung (20) von der zweiten Arretierkomponente (27) weg verschiebt, und wobei das Ändern der Bremskraft durch Schwenken der Schwenkverbindung (20) gegen die Verschiebkraft des Verschiebmechanismus (21) während des Bremsens bewirkt wird.

18. Bremsvorrichtung gemäß Anspruch 16 oder Anspruch 17, wobei die Vorrichtung ein Bremsarm-Verschiebmittel (35a, 35b, 74a, 74b) zum Verschieben beider Bremsarme (12a, 12b) in Richtung einer Bremslöseseite mit einer Verschiebkraft, die kleiner als diejenige des Verschiebmechanismus (21) ist, umfasst.

## Revendications

1. Un appareil de frein comprenant :
un bras de frein (12a, 12b) ;
un composant de couplage de patin de frein (17a, 17b) disposé sur le bras de frein (12a, 12b) pour recevoir une force de résistance de frein (F_{R}) provenant du contact entre un patin de frein (13a, 13b) et une jante de roue (5) ;
un composant de couplage d'organe de commande (24, 25, 27, 28) couplé au bras de frein (12a, 12b) pour recevoir une force de commande de frein (F_{C}) provenant d'un organe de commande (10) ;
un mécanisme de commande de force de frein (18) destiné à permettre un déplacement relatif entre le composant de couplage de patin de frein (17a, 17b) et le composant de couplage d'organe de commande (24, 25, 27, 28) quand la force de résistance de frein (F_{R}) et la force de commande de frein (F_{C}) dépassent toutes deux des valeurs non nulles particulières, le mécanisme de commande de force de frein (18) comportant un mécanisme de décalage (19, 20, 21, 22, 23, 101, 103) qui est capable de faire varier la force de freinage de l'appareil pendant le freinage ;
**caractérisé en ce que** le mécanisme de commande de force de frein (18) est couplé entre le composant de couplage de patin de frein (17a, 17b) et le composant de couplage d'organe de commande (24, 25, 27, 28); et **en ce que** le mécanisme de commande de force de frein (18) comprend une bielle oscillante (20) couplée de façon à pouvoir osciller entre le bras de frein (12a, 12b) et le composant de couplage d'organe de commande (24, 25, 27, 28) ;
et dans lequel le mécanisme de décalage (21) décale la bielle oscillante (20) vers une position initiale de sorte que la bielle oscillante (20) reste dans la position initiale jusqu'à ce que la force de résistance de frein (F_{R}) et la force de commande de frein (Fc) dépassent toutes deux les valeurs non nulles particulières.

2. Appareil de frein selon la revendication 1, dans lequel le bras de frein (12a, 12b) comporte une portion de couplage de pivot (16a, 16b) disposée sur soit une portion supérieure, soit une portion inférieure du bras de frein (12a, 12b) pour coupler, de façon à ce qu'il puisse pivoter, le bras de frein (12a, 12b) à un élément de montage (8a, 8b, 9a, 9b), dans lequel le composant de couplage de patin de frein (17a, 17b) est disposé sur une portion intermédiaire du bras de frein (12a, 12b), et dans lequel le composant de couplage d'organe de commande (24, 25, 27, 28) est disposé soit sur l'autre portion supérieure, soit sur l'autre portion inférieure du bras de frein (12a, 12b).

3. Appareil de frein selon l'une ou l'autre revendication précédente, dans lequel le composant de couplage de patin de frein (17a, 17b) comprend un composant d'attache de sabot (17a, 17b) formé sur une portion intermédiaire du bras de frein (12a, 12b).

4. Appareil de frein selon la revendication 1, dans lequel le composant de couplage de patin de frein (17a, 17b) est disposé soit sur une portion supérieure, soit sur une portion inférieure du bras de frein (12a, 12b), dans lequel le composant de couplage d'organe de commande (24, 25, 27, 28) est disposé soit sur l'autre portion supérieure, soit sur l'autre portion inférieure du bras de frein (12a, 12b), et dans lequel le bras de frein (12a, 12b) comporte une portion de couplage de pivot (16a, 16b) disposée sur une portion intermédiaire du bras de frein (12a, 12b) pour coupler, de façon à ce qu'il puisse pivoter, le bras de frein (12a, 12b) à un élément de montage (8a, 8b, 9a, 9b).

5. Appareil de frein selon n'importe quelle revendication précédente, dans lequel le mécanisme de commande de force de frein (18) est disposé en étroite proximité du composant de couplage d'organe de commande (24, 25, 27, 28).

6. Appareil de frein selon n'importe quelle revendication précédente, dans lequel le mécanisme de commande de force de frein (18) est disposé sur une portion supérieure du bras de frein (12a, 12b).

7. Appareil de frein selon n'importe quelle revendication précédente, dans lequel le mécanisme de commande de force de frein (18) comporte un mécanisme de variation de force de décalage (22) destiné à faire varier une force de décalage du mécanisme de décalage (19, 20, 21, 22, 23, 101 103).

8. Appareil de frein selon n'importe quelle revendication précédente, dans lequel le mécanisme de décalage comprend un ressort (21).

9. Appareil de frein selon la revendication 8, dans lequel le mécanisme de variation de force de décalage comprend une came (22) qui se met en prise avec une extrémité (21b) du ressort (21).

10. Appareil de frein selon la revendication 9, dans lequel l'extrémité (21b) du ressort (21) est incurvée, dans lequel la came (22) est montée sur un arbre de liaison (23), et dans lequel la came (22) possède une pluralité de faces de came incurvées (22a à 22c) disposées à des distances radiales différentes de l'arbre de liaison (23) pour se mettre en prise avec l'extrémité (21b) du ressort (21).

11. Appareil de frein selon n'importe quelle revendication précédente, dans lequel le composant de couplage d'organe de commande comprend un crochet de câble (24) couplé de façon à pouvoir pivoter à la bielle oscillante (20).

12. Appareil de frein selon la revendication 11, dans lequel le crochet de câble (24) est structuré pour être couplé à un guide interne (25) de l'organe de commande (10).

13. Appareil de frein selon n'importe quelle revendication précédente, dans lequel le composant de couplage d'organe de commande comprend une vis (28) attachée à la bielle oscillante (20).

14. Appareil de frein selon n'importe quelle revendication précédente, dans lequel le composant de couplage de patin de frein (17a, 17b) comporta un boulon d'attache (50a, 50b) destiné à monter le patin de frein (13a, 13b) au composant de couplage de patin de frein (17a, 17b).

15. Appareil de frein selon n'importe quelle revendication précédente, possédant
un premier et un deuxième bras de frein (12a, 12b) qui ont chacun un corps de bielle (15a, 15b) et le composant de couplage de patin de frein (17a, 17b) est fourni au corps de bielle (15a, 15b) et est utilisé pour attacher les patins de frein (13a, 13b) ; un premier composant d'arrêt (27) qui est fourni au premier bras de frein (12a) et qui est utilisé pour attacher une gaine externe (10b) de l'organe de commande (10) ; et
un deuxième composant d'arrêt (28) qui est fourni au deuxième bras de frein (12b) et qui est utilisé pour attacher un câble interne (10a) de l'organe de commande (10).

16. Appareil de frein selon la revendication 15, dans lequel la bielle oscillante (20) est fournie de façon à pouvoir osciller au premier bras de frein (12a), et le mécanisme de décalage (21) éloigne, en la décalant, la bielle oscillante (20) du deuxième composant d'arrêt (28), et dans lequel le changement dans la force de freinage est réalisé en faisant osciller la bielle oscillante (20) contre la force de décalage du mécanisme de décalage (21) pendant le freinage.

17. Appareil de frein selon la revendication 15, dans lequel la bielle oscillante (20) est fournie de façon à pouvoir osciller au deuxième bras de frein (12b), et le mécanisme de décalage (21) éloigne, en la décalant, la bielle oscillante (20) du premier composant d'arrêt (27), et dans lequel le changement dans la force de freinage est réalisé en faisant osciller la bielle oscillante (20) contre la force de décalage du mécanisme de décalage (21) pendant le freinage.

18. Appareil de frein selon la revendication 16 ou la revendication 17, dans lequel l'appareil comporte un moyen de décalage de bras de frein (35a, 35b, 74a, 74b) destiné à décaler les deux bras de frein (12a, 12b) vers un côté de déblocage de frein à une force de décalage qui est moindre que celle du mécanisme de décalage (21).
